# EUROPÄISCHE PATENTSCHRIFT

(11) **EP 1 974 974 B1**
(45) Veröffentlichungstag und Bekanntmachung des Hinweises auf die Patenterteilung: **07.07.2010**
(21) Anmeldenummer: 08405080.6
(22) Anmeldetag: 17.03.2008
(51) Int. Cl.: B60K 11/08

(54) **Jalousie für Kraftfahrzeuge**
Blind for motor vehicles
Store pour véhicules automobiles

(30) Priorität: 30.03.2007 CH 5262007; 30.03.2007 CH 5272007; 22.05.2007 EP 07405149; 03.07.2007 CH 10882007
(43) Veröffentlichungstag der Anmeldung: 01.10.2008
(73) Patentinhaber: Kunststoff Schwanden AG, CH-8762 Schwanden/GL (CH)
(72) Erfinder: Kiener, Albert, 8753 Mollis (CH); Küsperth, Josef, 8762 Schwanden (CH)
(74) Vertreter: Quehl, Horst Max

(56) Entgegenhaltungen:
- DE-A1- 3 905 349
- DE-A1- 4 414 893
- DE-A1- 10 047 952
- DE-A1-102005 021 676
- GB-A- 913 147

## Beschreibung

Die Erfindung betrifft eine Jalousie für die Steuerung des Luftstromes durch den Motorkühler eines Fahrzeuges, mit ringförmig nebeneinander angeordneten, sich in Schliessposition teilweise überdeckenden, einerseits in einem äusseren, für die Verbindung mit dem Kühler bestimmten Gehäusering und andererseits in einem inneren Stützring schwenkbar gelagerten Lamellen, wobei die Lamellen für ihren Schwenkantrieb an ihrem radial äusseren Ende Gegeneingriffsmittel für Eingriffsmittel aufweisen, die an einem mit dem Gehäusering gleich umlaufenden, in Umfangsrichtung verschiebbaren Stellring (13) vorgesehen sind,

Eine Jalousie dieser Art ist beispielsweise bekannt durch die DE-3905349 und die DE-10047952. Eine solche Jalousie bewirkt in geschlossenem Zustand, dass der Motor des Fahrzeuges sich nach Start schneller erwärmt und damit einen Betriebszustand mit besserem Wirkungsgrades und geringerem Verschleiss schneller erreicht. Ausserdem wird durch die geschlossene Jalousie das vom Motorraum in die Umgebung des Fahrzeuges gelangende Motorgeräusch verringert und es ergibt sich dabei eine Verbesserung des cw-Wertes des Fahrzeuges, indem die durch die Fahrgeschwindigkeit sich ergebende Anströmung gegen den frontseitigen Fahrzeugkühler nicht mit entsprechendem Strömungswiderstand durch diesen und einen Teil des Motorraumes hindurch weiter strömt.

Der Schwenkantrieb der Lamellen dieser bekannten Kühlerjalousien erfolgt jeweils über einen von ihrem Lagerzapfen radial wegragenden Schwenkhebel mit einem endseitigen Schwenkzapfen, der in einen umlaufenden, gemeinsamen Stellring eingreift. Da die Stellbewegung dieser Schwenkzapfen entlang eines Kreisbogens verläuft, bewirkt die Kopplung mit dem Stellring, dass dieser entweder eine Hubbewegung ausführt oder er benötigt für die Schwenkzapfen jeweils eine zum Strömungskanal hin offene, axial gerichtete Schlitzaufnahme.

Eine Jalousie nach dem Oberbegriff des Anspruchs 1 wird in DE 4 414 893 offenbart.

Die bekannten Jalousien der genannten Art haben folglich den Nachteil, dass ihre Stellmechanik einschliesslich der Lagerung ihrer Lamellen keinen wirkungsvollen Schutz gegen Eindringen von Verunreinigungen und Feuchtigkeit aufweist, so dass ihre Betriebssicherheit nach einiger Zeit, insbesondere bei Gefriertemperaturen verloren geht.

Der Erfindung liegt die Aufgabe zugrunde, eine Jalousie der eingangs genannten Art derart zu verbessern, dass sie bei geringem Gewicht und hoher Formsteifigkeit sowohl eine verbesserte Abdichtung gegen nach aussen dringende Motorgeräusche als auch gegen das Eindringen von Schmutz zu den Lamellenlagerungen und ihr Antriebssystem aufweist und folglich ihre Funktionstüchtigkeit dauerhaft gewährleistet ist. Ausserdem soll eine solche Jalousie aufgrund ihrer Gestaltung auf einfachere und damit kostengünstigere Weise herstellbar sein.

Die Lösung dieser Aufgabe erfolgt erfindungsgemäss aufgrund der Merkmale des Patentanspruchs 1.

Vorteilhafte Ausgestaltungen der Erfindung und ihre besonderen Vorteile sind der folgenden Beschreibung von Ausführungsbeispielen anhand der Zeichnungen zu entnehmen. Es zeigt jeweils in perspektivischer Darstellung:
Fig.1 eine erfindungsgemässe Jalousie in einer Baugruppe mit einer Kühlerzarge und dem Schaufelrad eines Kühlgebläses,
Fig.2 eine Darstellung eines sektorförmig ausgeschnittenen Bereiches der Jalousie nach Fig.1,
Fig.3 eine vergrösserte Teildarstellung von Fig.2,
Fig.4 eine Jalousie der Anordnung nach Fig.1,
Fig.5 eine selbsttätig im Luftstrom schwenkbare, asymmetrische Lamelle der Jalousie nach Fig.4,
Fig.6 den Zahneingriff eines Umfangsbereiches eines Stellringes mit dem gezahnten Steuerkopf zweier Lamellen der Jalousie nach Fig.2 bis 4,
Fig.7 zwei in Dichtposition aneinander anliegende Lamellen der Jalousie nach Fig.2 bis 4,
Fig.8 einen sektorförmig ausgeschnittenen Bereich einer weiteren Ausführungsform einer erfindungsgemässen Jalousie und
Fig.9 einen vergrösserten Ausschnitt der Jalousie nach Fig.8.

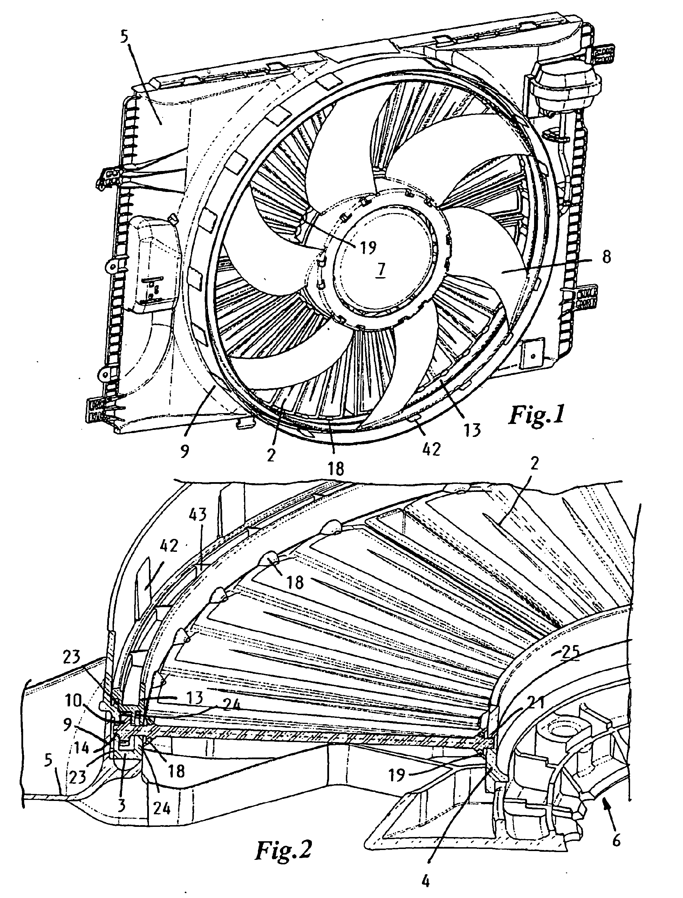

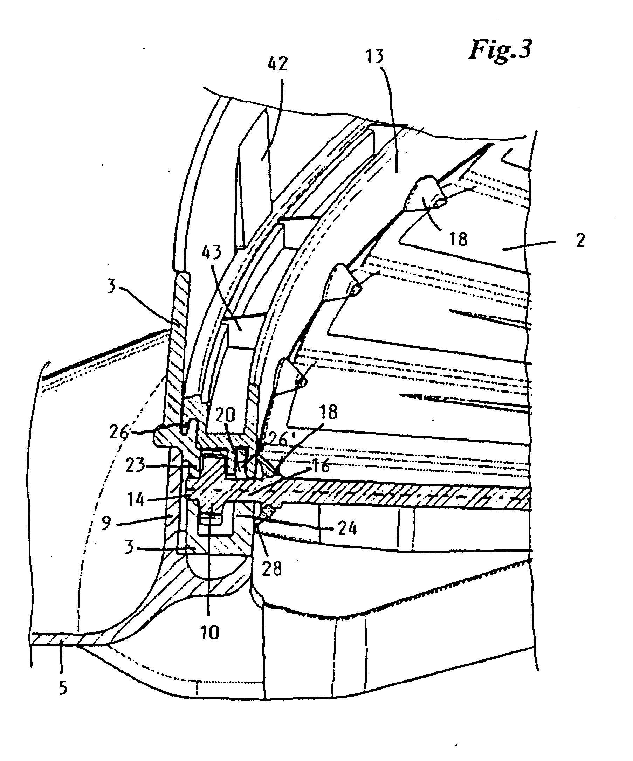

Die Jalousie 1 hat zahlreiche ringförmig nebeneinander angeordnete und radial gerichtete Lamellen 2, 22. Diese sind im Bereich ihres äussseren Endes in einem äusseren Gehäusering 3 und an ihrem inneren Ende in einem inneren Stützring 4 ortsfest um eine beide Lagerstellen miteinander verbindende geometrische Achse schwenkbar gelagert. Dabei kann der äussere Gehäusering 3 einstückig Bestandteil einer Kühlerzarge 5 sein, die mit ihrem zentralen Bereich 6 der Aufnahme des Elektromotors 7 eines Kühlgebläses 8 dient oder er hat entsprechend der Darstellung in Fig.2 und 3 einen Passsitz in einem rohrstutzenförmigen Ansatz 9 der Kühlerzarge 5, so dass diese jeweils einen Adapter zur Anpassung an bestimmte Kühlerdimensionen bildet.

Zur zwangsgesteuerten Bewegung der Lamellen 2 von einer dicht geschlossenen, den Fahrtwiderstand eines Fahrzeuges verringernden Position zu einer vollständig geöffneten Position haben diese an ihrem radial äusseren Ende einen vorzugsweise einstückig angeformten Steuerkopf 10 mit einem kreisbogenförmig entsprechend der Form eines Zahnrades entweder vollständig oder kreissektorförmig unvollständig umlaufenden, gezahnten Eingriffsbereich 12. Dieser befindet sich in kämmendem Eingriff mit einem gezahnten Umfangsbereich 11 eines an dem äusseren Gehäuseringes 3 verdrehbar geführten Stellringes 13.

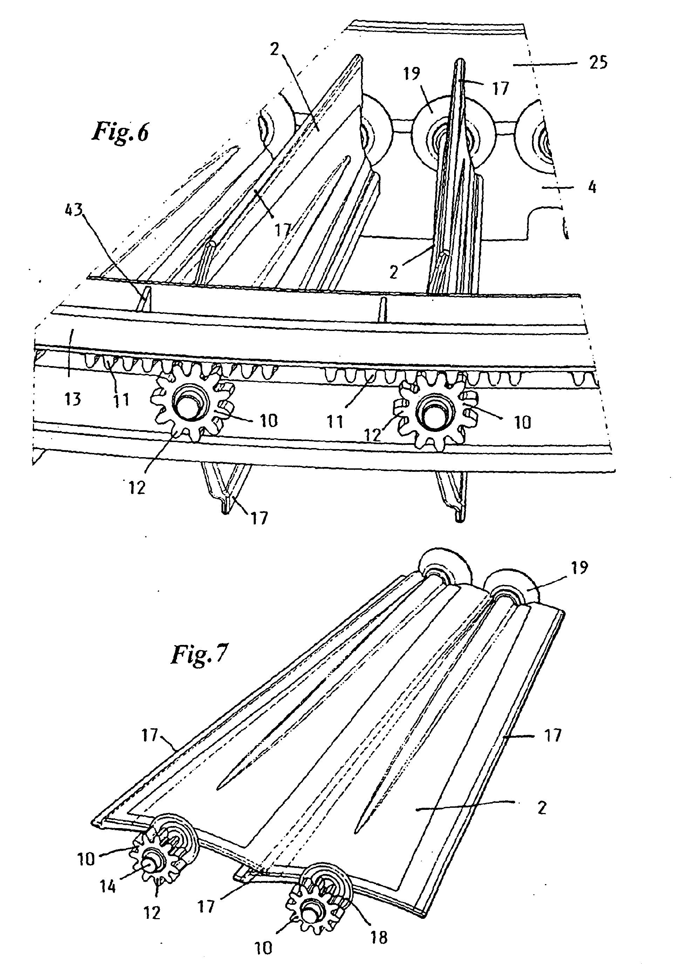

Für seine Verschiebung bzw. Stellverdrehung und damit Schwenken der steuerbaren Lammellen 2 in Abhängigkeit vom Signal eines z.B. im Kühlwasserstrom des Motorkühlers angeordneten Messfühlers, ist auf nicht dargestellte Weise zwischen einer Umfangsstelle des Stellringes 13 und der Kühlerzarge 5 ein elektrisch, pneumatisch oder hydraulisch wirkender Stellantrieb vorgesehen. Aufgrund der Erfindung benötigt dieser zum Schwenken der Lamellen 2 von vollständig geöffneter Position entsprechend der Darstellung in Fig.6 bis zur geschlossenen Position entsprechend den Darstellungen in Fig. 2 oder 7, d.h. um ca. 90°, nur einen kurzen, im Wesentlichen geraden Stellweg entsprechend einer Verdrehung des Stellringes 13 z.B. um nur ca. 3°.

Die Herstellung der Lamellen 2, 22 mit ihren für die drehbare Lagerung vorgesehenen Lagerzapfen 14,15, einem Achsstück 16, ihrem Steuerkopfes 10 und einem weichelastischen Lamellenrand 17 und einer an diesen einstückig angrenzenden Dichtmanschetten 18,19 erfolgt vorteilhaft ohne zwischenzeitliches Entformen in montagegerechter gegenseitiger Zuordnung in einer gemeinsamen Spritzgiessform.

Bei der anschliessenden Montage werden die Lamellen 2, 22 in im Wesentlichen u-förmige Lagerausnehmungen 20,21 des äusseren Gehäusering 3 und des inneren Stützringes 4 eingesetzt. Dabei rastet der äussere Lagerzapfen 14 der Lamellen 2 jeweils in eine Lageröffnung 40 ein, die im äusseren von zwei Querschnittsschenkeln 23,24 eines u-förmigen Querschnitts des Gehäuseringes 3 vorgesehen ist. Ein weiterer Rasteingriff kann auch mittels des Achsstückes 16 und des inneren Lagerzapfens 15 in die u-förmigen Lagerausnehmungen 20,21 hinein erfolgen, indem diese aussen geringfügig verengt sind.

Für die Sicherung der inneren Lagerzapfen 15 in einer Lagerausnehmung 21 ist der innere Stützring 4 zweiteilig ausgeführt und hat somit zusätzlich einen Schliessring 25. Eine zusätzliche Sicherung des Achsstückes 16 in der Lagerausnehmung 20 des äusseren Gehäuseringes 3 erfolgt entsprechend der Darstellung in Fig.2 und 3 durch den am Gehäusering 3 anliegenden Stellring 13.

Der Steuerkopf 10 der Lamellen 2 ist somit zwischen den beiden Querschnittsschenkeln 23,24 des Gehäuseringes 3 eingeschlossen. Der Verschluss nach aussen ergibt sich durch den auf dem Gehäusering 3 gleitenden Stellring 13. Dieser ist nach aussen durch in gleichmässigen Abständen an der Innenseite des Gehäuseringes 3 vorgesehene Rastnasen 42 in seiner axialen Position verdrehbar gehalten. Er hat einen nach aussen offenen, im Querschnitt u-förmigen Hohlquerschnitt und ist durch in gleichmässigen Abständen vorgesehene Stege 43 formstabil verstärkt.

Für ein zusätzliche Abdichtung gegen eindringende Verschmutzungen nach Art eines Dichtlabyrinths umgreift der Stellring 13 jeweils mittels im Querschnitt u-förmigen Aussparungen 26, 26' die Querschnittsschenkel 23,24 des Gehäuseringes 3. Es versteht sich, dass in umgekehrter, nicht dargestellter Anordnung Querschnittsschenkel des Stellringes 13 in entsprechende Aussparungen des Gehäuseringes 3 eingreifen können.

Vorzugsweise ist zusätzlich zu den mittels eines Stellantriebes in ihrer Stellposition veränderbaren Lamellen 2 mindestens eine Lamelle 22 vorgesehen, die frei schwenkbar ist und entweder in unsymmetrischer Ausführung durch ihr Eigengewicht oder durch Verbindung mit einem Fremdgewicht selbsttätig in Schliessposition gehalten ist, so dass sie erst beim Fahren durch den Staudruck einer Fahrtluftströmung selbsttätig in einer geöffneten Position geschwenkt gehalten wird. Auf diese Weise wird eine meistens ausreichende, wesentlich eingeschränkte Durchströmung des Motorkühlers und eine entsprechende, mit einer Geräuschdämmung verbundene Verbesserung des cw-Wertes des Fahrzeuges erreicht.

Für eine verbesserte Abdichtwirkung der Jalousie 1 erstreckt sich zumindest entlang der in Schliessposition auf einer benachbarten Lamelle 2 aufliegende Lamellenkante ein weichelastischer Lamellenrand 17, der im Spritzgiessverfahren einstückig an die aus steiferem Material bestehende Lamelle 2,22 angeformt ist. Vorzugsweise geht dieser weichelastische Lamellenrand 27 im Bereich der Lamellenenden einstückig einerseits in eine an dem äusseren Gehäusering 3 und dem Stellring 13 und andererseits an dem inneren Stützring 4 dichtend anliegende, kappenförmig eine Dichtlippe 28 bildende Dichtmanschette 18,19 über. Diese bewirkt eine zuverlässige Abdichtung der zum Verstellen der Lamellen 2 erforderlichen Bauelemente, d.h. der Lamellenlagerung und der Verstellmechanik einschliesslich des Stellringes 8 gegenüber Staub und Feuchtigkeit, so dass deren dauerhafte Funktion sichergestellt ist. Ausserdem bilden die an die Lamellen 2 angeformten Dichtmanschetten 18,19 durch ihre Elastizität einen auch der Geräuschdämpfung dienenden Toleranzausgleich für eine in achsialer Richtung spielfreie Lagerung und Abdichtung der Lamellen 2 gegenüber dem Gehäusering 3 und dem Stützring 4.

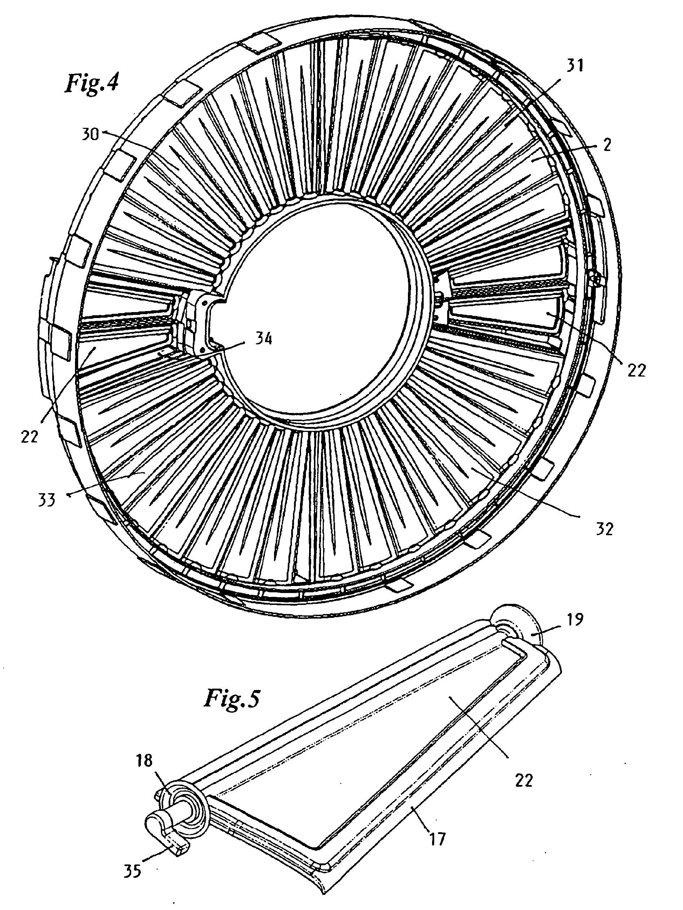

Die Herstellung eines Jalousierahmens bestehend u.a. aus äusserem Gehäusering 3 innerem Stützring 4 erfolgt vorzugsweise aus beispielsweise vier einzelnen 90°-Jalousiesektoren 30 bis 33 entsprechend der Darstellung in Fig.4, die nach Einsetzen der Lamellen 2,22 zu einer ringförmigen Gesamtjalousie über Kopplungselemente gekoppelt werden. Dabei ist für jeden Jalousiesektor 30 bis 33 eine frei schwenkbare Lamelle 22 vorgesehen, die aufgrund ihrer in Fig.5 dargestellten unsymmetrischen Form, bei Ausrichtung der Jalousie 1 in einer vorzugsweise vertikalen Ebene, durch Schwerkraft mit ihrem weichelastischen Rand 17 am benachbarten Begrenzungssteg 34 dichtend anliegt. Dabei ist die frei schwenkbare Lamelle 22 jeweils an einem Endbereich jedes der vier 90°-Jalousiesektoren angeordnet, so dass sich nach ihrer Verbindung miteinander zu einer ringförmigen Jalousie 1 entsprechend der Darstellung in Fig.4 jeweils zwei diametral und horizontal verlaufende Paare von frei schwenkbaren Lamellen 22 ergeben. Für die Begrenzung der Schwenkbarkeit dieser Lamellen 22 ist an deren Ende ein Anschlaghebel 35 angeformt.

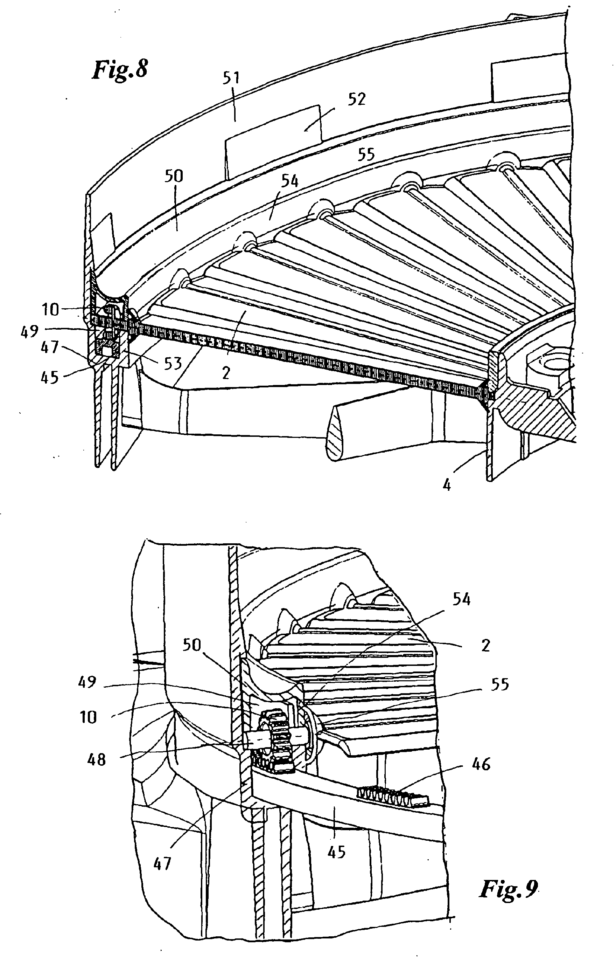

Bei einer weiteren Ausführungsform einer erfindungsgemässen Jalousie entsprechend den Darstellungen in Fig.8 und 9 ist ein Stellring 45 mit zahnstangenförmig aufeinander folgenden Eingriffsmitteln 46 in einem kanalförmigen Bereich des Gehäuseringes 47 eingeschlossen, so dass er in Strömungsrichtung bzw. axialer Richtung der Jalousie zwischen dem Gehäusering 47 und den Lamellenachsen 48 angeordnet ist. Dabei befindet er sich in einem umlaufenden Hohlraum 49, der einerseits durch den kanalförmigen Bereich des Gehäuseringes 47 und anderseits durch einen Kammerring 50 begrenzt ist, die sich miteinander in dichtendem Eingriff befinden.

An der Innenseite einer Bestandteil einer Kühlerzarge bildenden zylindrischen Wand 51 des Gehäuseringes 47 sind in Umfangsrichtung mehrere Rastnasen 52 angeformt, hinter denen der Kammerring 50 verrastet ist, so dass er dichtend an dem Gehäusering 47 anliegt.

Die Lamellenachsen 48 sind in Ausschnitten des Innenschenkels 53 des Gehäuseringes 47 eingesetzt, die nach aussen durch den Innenschenkel 54 des als Hohlprofil ausgebildeten Kammerringes 50 geschlossen sind, so dass der Kammerring 50 für die Lamellenachsen 48 einen Verschlussring bildet.

Wie bereits anhand des ersten Ausführungsbeispieles beschrieben, ist ausserdem der innere Lagerbereich der Lamellenachsen 48 von eine Dichtmanschette 55 umschlossen, so dass diese an den aneinandergrenzenden Querschnittsschenkeln 53 und 54 des Gehäuseringes 47 und des Kammerringes 50 dichtend anliegt.

## Patentansprüche

1. Jalousie für die Steuerung des Luftstromes durch den Motorkühler eines Fahrzeuges, mit ringförmig nebeneinander angeordneten, sich in Schliessposition teilweise überdeckenden, einerseits in einem äusseren, für die Verbindung mit dem Kühler bestimmten Gehäusering (3,47) und anderseits in einem inneren Stützring (4) schwenkbar gelagerten Lamellen (2), wobei die Lamellen (2) für ihren Schwenkantrieb an ihrem radial äusseren Ende Gegeneingriffsmittel (10) für Eingriffsmittel (11,46) aufweisen, die an einem mit dem Gehäusering (3,47) gleich umlaufenden, in Umfangsrichtung verschiebbaren Stellring (13,45) vorgesehen sind, **dadurch gekennzeichnet, dass** die Gegeneingriffsmittel (10) und die Eingriffsmittel (11,46) in einem geschlossenen, umlaufenden Hohlraum (49)gemeinsam dicht eingeschlossen sind, der einerseits durch einen Gehäusering (3,47) und anderseits durch einen Stellring (13) oder einen Kammerring (50) begrenzt ist, wobei der Stellring (13,45) an dem Gehäusering (3,47) in Umfangsrichtung verschiebbar geführt ist.

2. Jalousie nach Anspruch 1, **dadurch gekennzeichnet, dass** der umlaufende Hohlraum (49) seitlich durch zwei Querschnittsschenkel (23,24;53) des Gehäuseringes (3,47) begrenzt ist, zwischen denen die Gegeneingriffsmittel (10) angeordnet sind.

3. Jalousie nach Anspruch 1 oder 2, **dadurch gekennzeichnet, dass** der Stellring (45) mit seinen Eingriffsmitteln (46) zwischen zwei den umlaufenden Hohlraum (49) seitlich begrenzenden Querschnittsschenkeln (53) des Gehäuseringes (47) eingeschlossen ist.

4. Jalousie nach einem der Ansprüche 1 bis 3, **dadurch gekennzeichnet, dass** der umlaufende Hohlraum (49) durch einen kanalförmigen Querschnittsbereich sowohl des Gehäuseringes (47) als auch eines Kammerrings (50) begrenzt ist.

5. Jalousie nach einem der Ansprüche 1 bis 3, **dadurch gekennzeichnet, dass** der umlaufende Hohlraum durch den Gehäusering (3) und den Steuerring (13) begrenzt ist.

6. Jalousie nach Anspruch 5, **dadurch gekennzeichnet, dass** ein dichtender Eingriff des Stellringes (13) mit dem Gehäusering (3) labyrinthartig durch den stegförmigen Eingriff eines Bereiches von Querschnittsschenkeln (23,24) in mindestens eine im Querschnitt u-förmige Aussparung (26, 26') gebildet ist.

7. Jalousie nach Anspruch 1 oder 4, **dadurch gekennzeichnet, dass** eine steuerkopfseitige Lamellenachse (16,48) in einer Ausnehmung (20) des Gehäuseringes (3,47) gelagert ist, die zur Bildung einer Lamellenlagerung durch einen Querschnittsschenkel des Stellringes (13) oder eines Kammerringes (50) geschlossen ist.

8. Jalousie nach einem der Ansprüche 1 bis 7, **dadurch gekennzeichnet, dass** der Stellring (13) oder ein Kammerring (50) durch nach aussen in gleichmässigen Abständen an der Innenseite des Gehäuseringes (3) vorgesehene Rastnasen (42,52) in seiner axialen Position gehalten ist.

9. Jalousie nach einem der Ansprüche 1 bis 8, **dadurch gekennzeichnet, dass** der äussere Gehäusering (3) in einem rohrstutzenförmigen Ansatz (9) einer Kühlerzarge (5) gehalten ist.

10. Jalousie nach einem der Ansprüche 1 bis 9, **dadurch gekennzeichnet, dass** an den Enden der Lamellen (2,22) jeweils eine ihren Lagerbereich abdeckende und an dem Gehäusering (3,47) und dem Stützring (4) mit einer Dichtlippe (28) dichtend anliegende Dichtmanschette (18,19;55) vorgesehen ist.

11. Jalousie nacheinem der Ansprüche 1 bis 10, **dadurch gekennzeichnet, dass** die Lamellen (2,22) entlang zumindest einer ihrer mit einer benachbarten Lamelle (2) in Schliesskontakt gelangenden Längskanten einen weichelastischen Lamellenrand (27) aufweisen, der im Bereich der Lamellenenden in einem Stück in die Dichtmanschette (18,19) übergeht.

12. Jalousie nach einem der Ansprüche 1 bis 11, **dadurch gekennzeichnet, dass** eine grössere Anzahl der Lamellen (2) durch mechanische Kopplung mit einem durch einen Signalgeber geregelten Stellantrieb zwischen einer maximal geöffneten und einer vollständig geschlossenen Position schwenkbar sind und eine kleinere Anzahl der Lamellen (22) unabhängig von solcher Kopplung durch ihr Eigengewicht oder Verbindung mit einem Fremdgewicht in Schliessposition gehalten sind.

13. Jalousie nach einem der Ansprüche 1 bis 12, **dadurch gekennzeichnet, dass** sie aus über ringförmig zusammengefügten Jalousiesektoren (30 - 33) besteht:

14. Jalousie nach einem der Ansprüche 1 bis 13, **dadurch gekennzeichnet, dass** die Eingriffsmittel (11,46) des Stellringes (13,45) aus in Umlaufrichtung hintereinander angeordneten Zähnen bestehen, die sich in kämmendem Eingriff mit einem gezahnten, kreisbogenförmig verlaufenden Eingriffsbereich (12) eines die Gegeneingriffsmittel bildenden Steuerkopfes (10) befinden.

15. Jalousie nach Anspruch 14, **dadurch gekennzeichnet, dass** der Steuerkopf (10) einstückig an ein Achsstück (16,48) der Lamelle (2) angeformt ist.

## Claims

1. A blind for controlling the flow of air through the engine cooler of a vehicle, having ring-shaped lamellae (2) disposed next to one another, partially overlapping in the closed position, pivotably mounted on the one hand in an outer housing ring (3, 47) intended for connection to the cooler, and on the other hand in an inner supporting ring (4), the lamellae (2) having counter-engagement means (10) for engagement means (11, 46) for their pivot drive on their radially outer end which are provided on a positioning ring (13, 45) moveable in a circumferential direction and circulating identically to the housing ring (3,47), **characterised in that** the counter-engagement means (10) and the engagement means (11,46) are tightly enclosed together in a closed, circumferential hollow space (49) which on the one hand is delimited by a housing ring (3,47)and on the other hand by a positioning ring (13) or a chamber ring (50), the positioning ring (13,45) being guided moveably in a circumferential direction on the housing ring (3,47).

2. The blind according to Claim 1, **characterised in that** the circumferential hollow space (49) is delimited to the side by two cross-sectional sides (23,24;53) of the housing ring (3,47) between which the counter-engagement means (10) are disposed.

3. The blind according to Claim 1 or 2, **characterised in that** the positioning ring (45) is enclosed with its engagement means (46) between two cross-sectional sides (53) of the housing ring (47) delimiting the circumferential hollow space (49) to the side.

4. The blind according to any of Claims 1 to 3, **characterised in that** the circumferential hollow space (49) is delimited by a channel-shaped cross-sectional region both of the housing ring (47) and of a chamber ring (50).

5. The blind according to any of Claims 1 to 3, **characterised in that** the circumferential hollow space is delimited by the housing ring (3) and the controlling ring (13).

6. The blind according to Claim 5, **characterised in that** sealing engagement of the positioning ring (13) with the housing ring (3) is formed like a maze by the bar-shaped engagement of a region of the cross-sectional sides (23,24) in at least one recess (26, 26') with a U-shaped cross-section.

7. The blind according to Claim 1 or 4, **characterised in that** a lamella axis (16,48) on the control head side is mounted in a recess (20) of the housing ring (3,47) which is closed to form a lamella mounting through a cross-sectional side of the positioning ring (13) or of a chamber ring (50).

8. The blind according to any of Claims 1 to 7, **characterised in that** the positioning ring (13) or a chamber ring (50) is held in its axial position by detents (42, 52) provided to the outside, spaced equally apart from one another on the inside of the housing ring (3).

9. The blind according to any of Claims 1 to 8, **characterised in that** the outer housing ring (3) is held in a pipe socket-shaped appendage (9) of an edge of the cooler (5).

10. The blind according to any of Claims 1 to 9, **characterised in that** at the ends of the lamellae (2,22) a sealing sleeve (18,19;55) respectively covering its mounting region and resting such as to form a seal on the housing ring (3,47) and the supporting ring (4) with a sealing lip (28) is provided.

11. The blind according to any of Claims 1 to 10, **characterised in that** the lamellae (2,22) have along at least one of its longitudinal edges coming into closing contact with an adjacent lamella (2) a soft elastic lamella edge (27) which in the region of the lamella ends passes in one piece into the sealing sleeve (18,19).

12. The blind according to any of Claims 1 to 11, **characterised in that** a larger number of lamellae (2) can pivot between a maximally open and a totally closed position by mechanical coupling to an actuating drive controlled by a signal transmitter, and a smaller number of lamellae (22) are held in the closed position independently of this coupling by their own weight or connection to a foreign weight.

13. The blind according to any of Claims 1 to 12, **characterised in that** it is made up of blind sectors (30 - 33) joined together in a ring shape.

14. The blind according to any of Claims 1 to 13, **characterised in that** the engagement means (11,46) of the positioning ring (13,45) are made up of teeth disposed one behind the other in the circumferential direction and which engage like a comb with a toothed, engagement region (12) extending in a circular arc shape of a control head (10) forming the counter-engagement means.

15. The blind according to Claim 14, **characterised in that** the control head (10) is integrally moulded in one part onto an axis piece (16,48) of the lamella (2).

## Revendications

1. Rideau déroulant pour la commande du flux d'air par le refroidisseur à moteur d'un véhicule automobile, comportant des lamelles (2) agencées l'une à côté de l'autre en forme de bague, se chevauchant en partie dans la position de fermeture, d'une part logées dans une bague extérieure de cadre (3, 47) destinée à la liaison avec le refroidisseur et d'autre part montées avec faculté de pivotement dans une bague intérieure de soutien (4), dans lequel les lamelles (2) présentent sur leur extrémité radiale extérieure des moyens d'engagement réciproque (10) pour leur entraînement rotatif prévus pour des moyens d'engagement (11, 46), lesquels sont prévus sur une bague de réglage (13, 45) qui tourne dans le même sens que la bague de cadre (3, 47) et qui est déplaçable dans la direction circonférentielle, **caractérisé en ce que** les moyens d'engagement réciproque (10) et les moyens d'engagement (11, 46) sont enfermés en communauté et de manière étanche dans une cavité périphérique fermée (49) qui est limitée d'une part par une bague de cadre (3, 47) et d'autre part par une bague de réglage (13) ou par une bague de chambre (50), dans lequel la bague de réglage (13, 45) est guidée avec faculté de translation dans la direction circonférentielle sur la bague de cadre (3, 47).

2. Rideau déroulant selon la revendication 1, **caractérisé en ce que** la cavité périphérique (49) est limitée latéralement par deux tenons de section transversale (23, 24 ; 53) de la bague de cadre (3, 47) entre lesquels les moyens d'engagement réciproque (10) sont agencés.

3. Rideau déroulant selon l'une ou l'autre des revendications 1 et 2, **caractérisé en ce que** la bague de réglage (45) est enfermée avec ses moyens d'engagement (46) entre deux tenons de section transversale (53) de la bague de cadre (47), lesquels limitent latéralement la cavité périphérique (49).

4. Rideau déroulant selon l'une des revendications 1 à 3, **caractérisé en ce que** la cavité périphérique (49) est limitée par une zone de section transversale en forme de canal, aussi bien de la bague de cadre (47) que de la bague de chambre (50).

5. Rideau déroulant selon l'une des revendications 1 à 3, **caractérisé en ce que** la cavité périphérique (49) est limitée par la bague de cadre (3) et par la bague de commande (13).

6. Rideau déroulant selon la revendication 5, **caractérisé en ce qu'**un engagement étanchant de la bague de commande (13) avec la bague de cadre (3) est formé à la manière d'un labyrinthe par l'engagement en forme de tenon d'une zone des tenons de section transversale (23, 24) dans au moins un évidement en forme de « U » (26, 26') dans la section transversale.

7. Rideau déroulant selon l'une ou l'autre des revendications 1 et 4, **caractérisé en ce qu'**un axe de lamelle (16, 48) du côté de la tête de commande est monté dans un évidement (20) de la bague de cadre (3, 47), lequel est fermé pour la formation d'un palier de lamelle par un tenon de section transversale de la bague de réglage (13) ou d'une bague de chambre (50).

8. Rideau déroulant selon l'une des revendications 1 à 7, **caractérisé en ce que** la bague de réglage (13) ou une bague de chambre (50) est maintenue dans sa position axiale par des tenons d'enclenchement (42, 52) prévus vers l'extérieur à intervalles réguliers sur le côté intérieur de la bague de cadre (3).

9. Rideau déroulant selon l'une des revendications 1 à 8, **caractérisé en ce que** la bague extérieure de cadre (3) est maintenue dans un appendice (9) en forme de tubulure d'un châssis de refroidisseur (5).

10. Rideau déroulant selon l'une des revendications 1 à 9, **caractérisé en ce qu'**une manchette d'étanchéité (18, 19 ; 55), qui recouvre sa zone de montage et qui vient s'appliquer de manière étanche sur la bague de cadre (3, 47) et sur la bague de soutien (4) avec une lèvre d'étanchéité (28), est prévue respectivement sur les extrémités des lamelles (2, 22).

11. Rideau déroulant selon l'une des revendications 1 à 10, **caractérisé en ce que** les lamelles (2, 22) présentent un bord de lamelle élastique et souple (27) le long d'au moins une de leurs arêtes longitudinales qui arrivent en contact de fermeture avec une lamelle adjacente (2), lequel se transforme en un seul tenant dans la manchette d'étanchéité (18, 19) dans la zone des extrémités de lamelle.

12. Rideau déroulant selon l'une des revendications 1 à 11, **caractérisé en ce que** de plus nombreuses lamelles (2) peuvent être pivotées par le couplage mécanique avec un mécanisme de commande régulé par un encodeur de signaux entre une position ouverte au maximum et une position entièrement fermée et **en ce que** de moins nombreuses lamelles (22) sont maintenues dans la position de fermeture indépendamment d'un tel couplage par leur propre poids ou en liaison avec un poids externe.

13. Rideau déroulant selon l'une des revendications 1 à 12, **caractérisé en ce qu'**il est constitué de secteurs de rideau déroulant (30 - 33) assemblés en forme de bague.

14. Rideau déroulant selon l'une des revendications 1 à 13, **caractérisé en ce que** les moyens d'engagement (11, 46) de la bague de réglage (13, 45) sont constitués de dents agencées l'une derrière l'autre dans la direction circonférentielle, lesquelles se trouvent en engagement de coiffe avec une zone d'engagement dentée et qui s'étend en forme d'arc de cercle (12) d'une tête de commande (10) qui forme les moyens d'engagement réciproque.

15. Rideau déroulant selon la revendication 14, **caractérisé en ce que** la tête de commande (10) est conformée en un seul tenant sur un tronçon d'axe (16, 48) de la lamelle (2).
